Europäisches Patentamt

European Patent Office

Office européen des brevets

(11) Numéro de publication : **0 030 875**
**B1**

# (12) FASCICULE DE BREVET EUROPÉEN

(45) Date de publication du fascicule du brevet :
**15.08.84**

(21) Numéro de dépôt : **80401643.4**

(22) Date de dépôt : **17.11.80**

(51) Int. Cl.³ : **G 09 F 9/30**, G 09 F 9/35, G 02 F 1/133

(54) **Dispositif d'éclairage pour grand écran.**

(30) Priorité : **07.12.79 FR 7930064**

(43) Date de publication de la demande :
**24.06.81 Bulletin 81/25**

(45) Mention de la délivrance du brevet :
**15.08.84 Bulletin 84/33**

(84) Etats contractants désignés :
**BE CH DE GB IT LI NL SE**

(56) Documents cités :
**GB-A- 1 413 039**
**GB-A- 1 442 249**
**GB-A- 1 527 326**
**US-A- 1 904 132**
**US-A- 3 869 195**

(73) Titulaire : **COMMISSARIAT A L'ENERGIE ATOMIQUE
Etablissement de Caractère Scientifique Technique
et Industriel
B.P. 510
F-75752 Paris Cedex 15 (FR)**

(72) Inventeur : **Deutsch, Jean-Claude
52, rue Thiers
F-38000 Grenoble (FR)**

(74) Mandataire : **Mongrédien, André et al
c/o BREVATOME 25, rue de Ponthieu
F-75008 Paris (FR)**

Jouve, 18, rue St-Denis, 75001 Paris, France

## Description

La présente invention concerne un dispositif d'éclairage pour grand écran.

Ce dispositif permet d'éclairer toute grande surface de façon uniforme, à l'aide d'une lumière arrivant sous un faible angle d'incidence, et notamment d'éclairer un écran d'affichage du type à cristaux liquides ou autre.

Actuellement les affichages sur grand écran sont faits par projection des éléments affichés sur une cellule d'affichage, à cristaux liquides par exemple, sur un verre dépoli formant écran. Le dispositif de type KOEHLER permettant l'éclairage de l'écran est constitué par un condenseur de lumière, formé d'une lentille de champ convergente dont la surface est supérieure ou égale à la surface de la cellule à éclairer, et d'une source lumineuse placée, par exemple, au foyer de la lentille. Les condenseurs actuellement utilisés ont une distance focale au moins égale au diamètre de la lentille. En conséquence, l'encombrement en profondeur du dispositif est de l'ordre de la dimension de l'écran, ce qui, pour un grand écran, conduit à un dispositif volumineux.

L'invention a pour but de remédier à ces inconvénients et notamment de réduire considérablement l'encombrement du dispositif d'éclairage.

Dans les documents GB-A-1 527 326, GB-A-1 413 039, GB-A-1 442 249 et US-A-1 904 132 il est décrit différents types de dispositif permettant d'éclairer un grand écran.

L'invention a pour objet un dispositif d'éclairage pour un grand écran permettant d'éclairer par l'arrière et de manière uniforme cet écran, à l'aide d'une lumière arrivant sous un faible angle d'incidence $\theta$. Ce dispositif se caractérise en ce qu'il comprend sous forme matricielle, n.p sources lumineuses réelles ou virtuelles et n.p éléments optiques permettant de diriger sur l'écran la lumière provenant de chaque source, les n.p éléments optiques étant constitués de n lames séparatrices et de p lentilles réelles associées chacune à une source lumineuse réelle, et des moyens pour empêcher que les rayons lumineux issus de chaque source n'atteignent les éléments optiques associés aux autres sources.

Selon une variante de l'invention, les moyens utilisés pour empêcher que les rayons lumineux issus de chaque source n'atteignent les éléments optiques associés aux autres sources sont constitués de diaphragmes.

Selon une autre variante de l'invention, les n lames séparatrices forment un angle de 45° avec l'écran et sont placées à égale distance de leurs voisines, tandis que les p lentilles réelles, chacune d'elles étant associée à une source lumineuse réelle, sont placées perpendiculairement à l'écran.

Dans un premier type de dispositif selon cette variante de l'invention, ces lames séparatrices possèdent le même coefficient de réflexion. De plus il existe un miroir disposé après la dernière lame séparatrice et renvoyant sur lui-même le faisceau lumineux qui en émerge, et un miroir disposé à l'arrière de l'ensemble des lames séparatrices et renvoyant sur eux-mêmes les faisceaux lumineux émergeant de la face arrière des lames séparatrices.

Dans un deuxième type de dispositif selon la même variante, la dernière lame séparatrice est totalement réfléchissante et les autres ont des coefficients de réflexion différents tels que l'intensité lumineuse réfléchie par chacune des lames sur l'écran soit la même.

Selon une autre caractéristique de l'invention, les sources lumineuses sont obtenues à l'aide de tubes fluorescents.

Selon une autre caractéristique de l'invention, l'angle d'incidence $\theta$ sous lequel est éclairé l'écran est choisi de façon que :

$$\theta = d/2f$$

où d représente le diamètre des sources et f la distance focale de chaque lentille réelle.

D'autres caractéristiques et avantages de l'invention ressortiront mieux à l'aide de la description qui va suivre, donnée à titre purement illustratif et non limitatif, en référence aux figures annexées dans lesquelles :

la figure 1 représente schématiquement un écran d'affichage éclairé à l'aide d'un dispositif ne faisant pas partie de l'invention et réalisée sous forme matricielle ;

la figure 2 représente schématiquement un écran d'affichage éclairé à l'aide d'un autre dispositif ne faisant pas partie de l'invention et réalisé également sous forme matricielle.

la figure 3 représente schématiquement selon un premier mode de réalisation, un dispositif d'éclairage d'écran selon l'invention ;

la figure 4 représente schématiquement selon un second mode de réalisation de l'invention, un dispositif d'éclairage d'écran selon l'invention ;

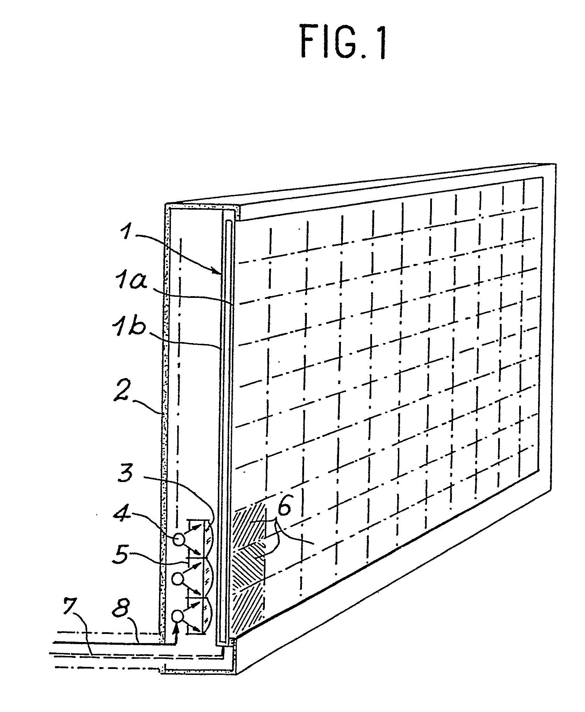

La Fig. 1 représente un écran d'affichage, par exemple à cristaux liquides, éclairé à l'aide d'un dispositif réalisé sous forme matricielle. L'écran d'affichage 1 et le dispositif d'éclairage de cet écran sont contenus dans un boîtier rigide. Ce boîtier comprend une face avant 1 qui est l'écran d'affichage même, et une face arrière 2, constituant le dos de ce boîtier. Ce boîtier a la forme d'un parallélépipède rectangle de faible épaisseur. La face $1_a$ de l'écran d'affichage 1 est en verre dépoli, permettant la diffusion de la lumière, la face $1_b$, en verre transparent, constitue le dos de cet écran. Entre les deux faces 1 et 2 du boîtier se trouvent n.p lentilles convergentes 3, ou condenseurs, disposées sous forme matricielle éclairées chacune par une source lumineuse 4, placée par exemple, au foyer de la lentille. Un diaphragme 5 associé à chaque source 4 limite le champ lumineux de la lentille correspondante et permet d'empêcher que les rayons lumineux issus de cette source n'atteignent les lentilles associées aux autres sources. Le dispositif précédent permet d'éclairer un petit élément 6 de la face $1_a$ de l'écran 1. La référence 7 représente un cordon d'amenée des informations aptes à mettre en œuvre le principe d'affichage sur l'écran, tandis que la référence 8 correspond à un cordon d'amenée d'alimentation en courant des sources lumineuses 4.

Le système électrique, comme par exemple les électrodes, permettant de sensibiliser entre autres des cristaux liquides, est situé, ainsi que les cristaux liquides, entre les faces $1_a$ et $1_b$ de l'écran d'affichage et n'a pas été représenté sur le schéma. Ce système ne faisant pas non plus partie de l'invention ne sera pas décrit par la suite.

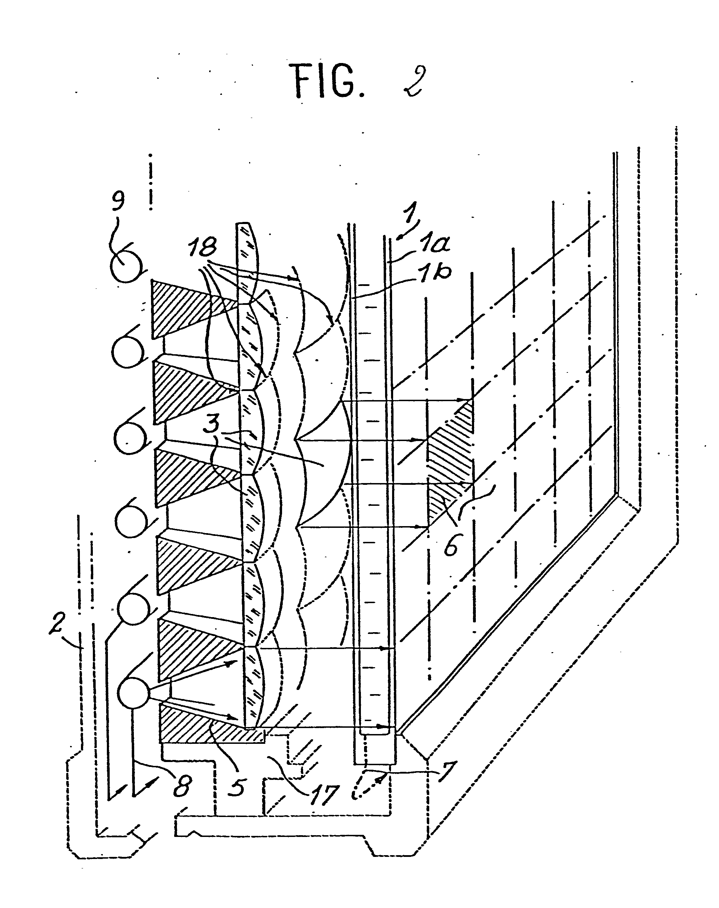

La Fig. 2 représente elle aussi un écran d'affichage éclairé à l'aide d'un dispositif réalisé sous forme matricielle. Sur cette figure, on voit que les proportions du boîtier ne sont pas respectées. Les n.p sources lumineuses sont représentées par n tubes fluorescents 9 s'étendant sur toute la longueur de l'écran. Le diamètre de ces tubes est aussi fonction des conditions d'éclairement que l'on veut obtenir sur la face $1_a$ de l'écran. Les n.p faisceaux lumineux issus de ces tubes sont limités par n.p diaphrames pyramidaux 5 et ces n.p faisceaux lumineux sont condensés à l'aide de n.p lentilles convergentes et réelles 3 accolées les unes aux autres. Ces lentilles sont placées parallèlement à l'écran de façon à éclairer uniformément cet écran. La rigidité du boîtier et le parallélisme des faces 1 et 2 dudit boîtier sont obtenus à l'aide d'un support métallique 17. La référence 18 indique la zone de contact entre chaque lentille convergente.

En variante du mode de réalisation de la figure 2, on peut remplacer les n tubes fluorescents par un panneau fluorescent ou électroluminescent.

Dans chacun de ces modes de réalisation la face $1_a$ en verre dépoli de l'écran est éclairée à l'aide de n.p dispositifs d'éclairage constitués chacun d'une source et d'une lentille convergente. Comme la dimension d'une lentille fixe une limite inférieure à sa distance focale, l'utilisation de n.p dispositifs d'éclairage au lieu d'un seul dispositif permet de diviser la distance focale de ce dispositif par le plus grand des deux nombres n et p, à ouverture fixée. De plus, l'encombrement du dispositif d'éclairage étant fonction de la distance focale de la lentille, l'utilisation de n.p lentilles permet de réduire d'autant l'encombrement.

La réduction de l'encombrement du dispositif d'éclairage permet, ainsi, de fabriquer un grand écran, maintenu dans un boîtier de faible épaisseur et contenant tout le dispositif d'éclairage de cet écran.

Le fait d'éclairer un tel écran, de façon uniforme, à l'aide de n.p dispositifs d'éclairage implique certaines conditions en ce qui concerne le dispositif d'éclairage. En conséquence, l'utilisation de diaphragmes droits ou pyramidaux permettant de limiter le champ de la lentille associée, empêche qu'un rayon lumineux sortant de la lentille ne rencontre les rayons sortant des autres lentilles.

Dans le cas particulier d'une source lumineuse placée au foyer de la lentille, les rayons lumineux sortent de la lentille parallèlement à l'axe optique. Dans ces conditions, les rayons extrêmes issus de deux lentilles accolées sortent parallèlement et à proximité l'un de l'autre sans pour cela se rencontrer.

Pour obtenir un éclairement uniforme de l'écran, il faut de plus, que la zone de contact entre deux lentilles voisines soit inférieure à une certaine valeur (environ inférieure à 80 μ), de façon que les rayons lumineux extrêmes des deux lentilles voisines arrivent sur l'écran à une distance inférieure à celle que nécessite le pouvoir de résolution de l'œil.

Pour simplifier le problème on a placé la source lumineuse au foyer de la lentille, mais ceci n'exclut en rien les autres positions possibles de cette source lumineuse, ce qui implique que les rayons lumineux peuvent arriver sur l'écran sous un certain angle de champ θ, faible. Cet angle de champ doit être égal au maximum à la valeur fixée par le fonctionnement de la cellule à cristaux liquides. Cet angle de champ dépend bien entendu de la dimension de la source et de la distance focale de la lentille associée. Ces dernières doivent donc être choisies convenablement. Par exemple, lorsque l'on utilise, selon le second mode de réalisation, les n tubes fluorescents comme sources lumineuses et les n.p. lentilles réelles, l'angle de champ, ou d'incidence, θ sous lequel est éclairé l'écran est égal à d/2f où d représente le diamètre des tubes et f la distance focale de chaque lentille.

Quelques données numériques permettront de faire ressortir les avantages de ce dispositif.

Pour éclairer un écran d'affichage de 9 cm de large sur 13 cm de long, on utilisait jusqu'à présent un condenseur ayant une distance focale, donc un encombrement de 16 cm avec une source de 40 mm de diamètre et un angle de champ de plus ou moins 8°. En utilisant maintenant n.p. sources lumineuses de 3 mm de diamètre, on obtient pour le même écran que ci-dessus un encombrement en profondeur de 10 mm.

Pour éclairer un écran d'affichage de 10 cm de large sur 13 cm de long, on a utilisé 13 fois 10 lentilles convergentes ayant 1 cm de côté et de distance focale 2 cm. L'angle de champ sous lequel l'écran est éclairé est de plus ou moins 8°. Dans ces conditions, les tubes utilisés selon le second mode de réalisation ont un diamètre de 5,6 mm.

Les deux figures suivantes représentent deux modes de réalisation qui découlent des modes de réalisation précédents et présentent les mêmes avantages, mais dans lesquels le nombre de lentilles est réduit, ce qui constitue un avantage supplémentaire. Ces deux nouveaux modes de réalisation constituent l'objet de l'invention.

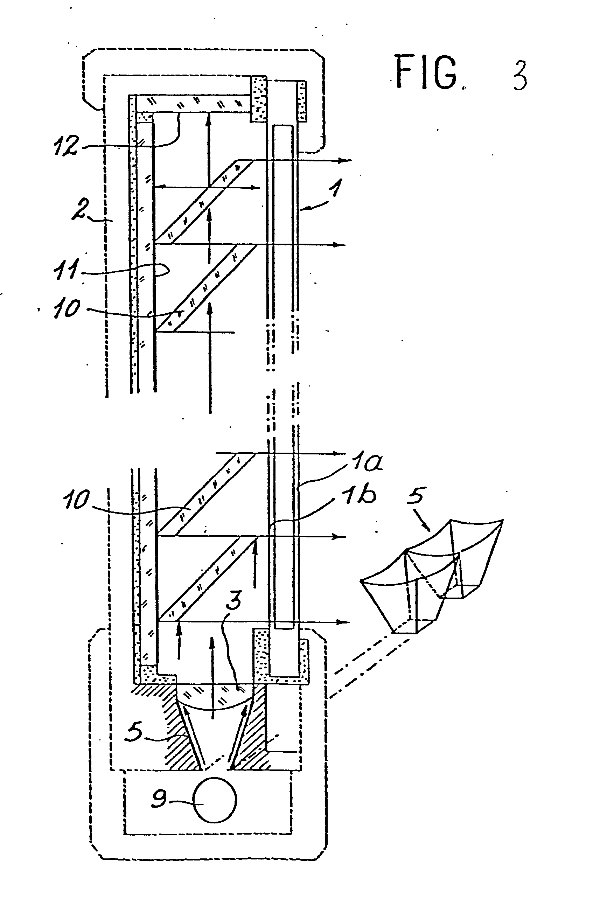

La Fig. 3 représente un premier mode de réalisation de l'invention. Pour mieux voir les différents éléments constituant le dispositif d'éclairage les dimensions du boîtier et notamment l'épaisseur de celui-ci n'ont pas été respectées. Dans ce mode de réalisation, les p sources lumineuses réelles sont obtenues à l'aide d'un tube fluorescent 9. Ce tube 9 s'étendant sur toute la longueur de l'écran, possède un diamètre fonction des conditions d'éclairement que l'on veut obtenir sur la face $1_a$ de l'écran. Les rayons lumineux issus de chaque source lumineuse réelle sont limités par un diaphragme pyramidal 5 puis arrivent sur une lentille réelle, convergente 3. La lumière issue de cette lentille convergente traverse n lames séparatrices 10, disposées à 45° de l'écran 1 et s'étendant sur toute la longueur de celui-ci. Chaque lame 10 réfléchit une partie de la lumière sur l'écran d'affichage 1 tandis que la lumière transmise par cette même lame 10 atteint les autres lames placées de façon équidistante les unes des autres. Une partie de la lumière transmise rencontre des miroirs 11 et 12 qui permettent de réfléchir la lumière vers les lames séparatrices 10 ou l'écran 1. Le miroir 11 est placé parallèlement à l'écran 1 et est accolé à la face arrière 2 du boîtier tandis que le miroir 12 est placé après la dernière lame séparatrice 10 de façon perpendiculaire à l'écran. Le dispositif comprenant les deux miroirs 11 et 12 et les n lames séparatrices 10 constituent n dispositifs virtuels d'éclairage de l'écran qui se combinent aux p dispositifs réels décrits ci-dessus. On a donc bien n.p. dispositifs d'éclairage de l'écran disposés sous forme matricielle. Dans ce mode de réalisation, l'intensité lumineuse reçue par chaque lame dépend de la position de celle-ci par rapport aux autres. En conséquence, pour éclairer de façon uniforme l'écran d'affichage, il doit exister une certaine relation entre les différents coefficients de réflexion. Si l'on utilise une lumière polarisée parallèlement au plan d'incidence, le calcul montre qu'il existe une valeur de coefficient de réflexion telle qu'il est le même pour chaque lame et que l'éclairage est uniforme sur l'écran. On peut ainsi utiliser n lames séparatrices 10 identiques.

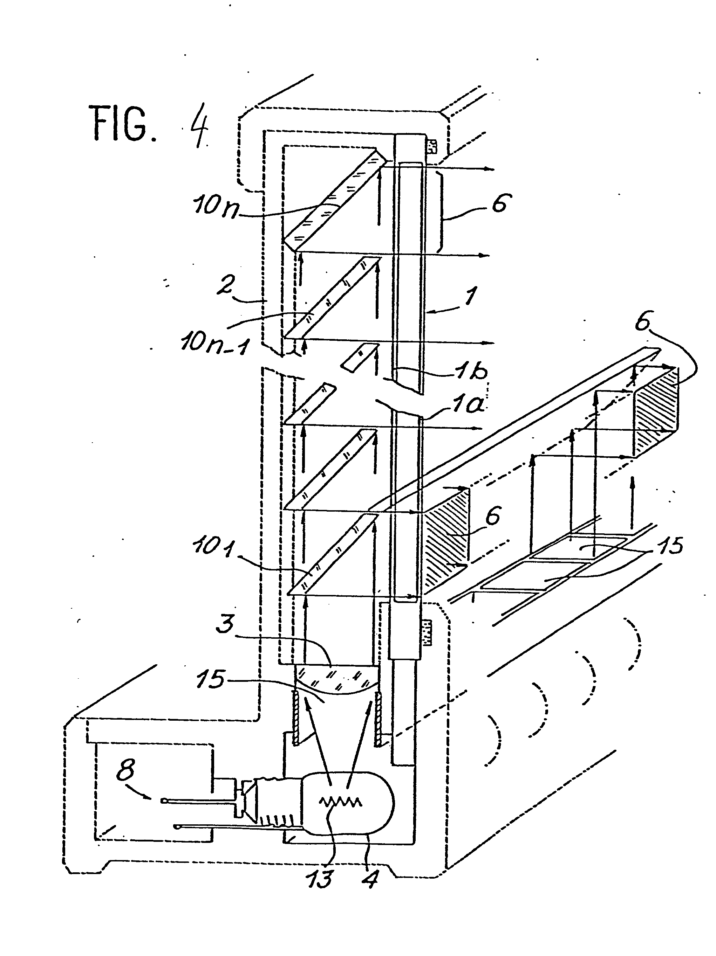

La Fig. 4 représente selon un second mode de réalisation le dispositif d'éclairage d'écran selon l'invention. Dans ce mode de réalisation, les p sources lumineuses réelles 4 sont représentées par des sources à filament 13. Comme précédemment la surface du filament est fonction des conditions d'éclairement que l'on veut obtenir sur la face $1_a$ de l'écran. La référence 8 représente le système d'alimentation de la source lumineuse 4 à filament 13. Chaque faisceau lumineux issu de ces lampes 4 est limité par un diaphragme droit 15. Ce faisceau lumineux est ensuite condensé à l'aide d'une lentille réelle, convergente 3. La lumière issue de cette lentille 3 est en partie réfléchie vers la face $1_a$ de l'écran par n lames séparatrices référencées $10_1$ à $10_n$, placées comme précédemment. Le coefficient de réflexion de ces n lames est différent pour chaque lame. Ce coefficient de réflexion est tel que l'intensité lumineuse réfléchie par chaque lame sur l'écran soit la même. Dans ces conditions, la dernière lame $10_n$ possède un coefficient de réflexion voisin de un, cette lame $10_n$, totalement réfléchissante, peut être un miroir. Dans ces conditions, la lumière issue de p dispositifs réels d'éclairage et réfléchie par les n lames séparatrices semble venir de n.p. dispositifs d'éclairage, disposés sous forme matricielle.

L'intensité lumineuse reçue par chaque lame dépend de la position de celle-ci par rapport aux autres. En conséquence, pour éclairer de façon uniforme l'écran d'affichage, il doit exister une certaine relation entre les différents coefficients de réflexion.

Soit $\rho_i$ le coefficient de réflexion d'une lame et $\rho_{i+1}$ le coefficient de réflexion de la lame suivante, on peut montrer que :

$$\rho_{i+1} = \rho_i/(1 - i\rho_i)$$

En conséquence, pour n lames séparatrices les différents coefficients de réflexion sont :
— pour la première lame : $\rho_1 = 1/n$
— pour la ième lame : $\rho_i = 1/(n - i)$
— pour la dernière lame : $\rho_n = 1$

Le dispositif de l'invention peut être appliqué de façon avantageuse à un système entièrement informatisé, de petites dimensions pouvant être utilisé à domicile pour remplacer les annuaires téléphoniques.

**Revendications**

1. Dispositif pour éclairer par l'arrière et de manière uniforme un grand écran d'affichage à l'aide d'une lumière arrivant sous un faible angle d'incidence θ, caractérisé en ce qu'il comprend sous forme matricielle, n.p. sources lumineuses réelles ou virtuelles (4 ou 9) et n.p éléments optiques permettant de diriger sur l'écran la lumière provenant de chaque source, les n.p. éléments optiques étant constitués de n lames séparatrices (10) et de p lentilles réelles (3) associées chacune à une source lumineuse réelle, et des moyens (5, 15) pour empêcher que les rayons lumineux issus de chaque source n'atteignent les éléments optiques associés aux autres sources.

2. Dispositif selon la revendication 1, caractérisé en ce que les moyens utilisés pour empêcher que les rayons lumineux, issus de chaque source n'atteignent les éléments optiques associés aux autres sources sont constitués de diaphragmes (5 ou 15).

3. Dispositif selon l'une quelconque des revendications 1 et 2, caractérisé en ce que chacune des n lames séparatrices (10) forme un angle de 45° avec l'écran (1) et est placée à égale distance de ses voisines.

4. Dispositif selon l'une quelconque des revendications 1 à 3, caractérisé en ce que les p lentilles réelles (3) chacune d'elles étant associée à une source lumineuse réelle (4), sont placées perpendiculairement à l'écran (1).

5. Dispositif selon l'une quelconque des revendications 1 à 4, caractérisé en ce que les n lames séparatrices (10) possèdent le même coefficient de réflexion, en ce que la dernière lame est suivie d'un miroir (12) réfléchissant sur lui-même le faisceau lumineux émergeant de cette dernière lame et en ce qu'un second miroir (11) disposé à l'arrière de l'ensemble des lames séparatrices réfléchis sur eux-mêmes les faisceaux lumineux réfléchis sur la face arrière des lames séparatrices (10).

6. Dispositif selon l'une quelconque des revendications 1 à 4, caractérisé en ce que les n lames séparatrices (10) possèdent chacune un coefficient de réflexion différent tel que l'intensité lumineuse réfléchie par chacune des lames sur l'écran soit la même, la dernière lame étant totalement réfléchissante.

7. Dispositif selon l'une quelconque des revendications 1 à 6, caractérisé en ce que les sources lumineuses réelles sont obtenues à l'aide de tubes fluorescents (9).

8. Dispositif selon l'une quelconque des revendications 1 à 7, caractérisé en ce que l'angle d'incidence θ, sous lequel est éclairé l'écran (1) est choisi de façon que θ = d/2f où d représente le diamètre des sources et f la distance focale de chaque lentille réelle (3).

**Claims**

1. Apparatus for illuminating a large display screen in uniform manner from the rear by means of light arriving at a small angle of incidence θ, characterised in that it comprises, in matrix form, n.p. real or virtual light sources (4 or 9) and n.p optical elements permitting light from each source to be directed on the screen, the n.p. optical elements comprising n separation plates (10) and p real lenses (3) each associated with a real light source, and means (5, 15) for preventing light rays emitted by each source from reaching the optical elements associated with other sources.

2. Apparatus according to claim 1, characterised in that the means for preventing light rays emitted by each source from reaching the optical elements associated with other sources comprise diaphragms (5 or 15).

3. Apparatus according to claim 1 or 2, characterised in that each of the n separation plates (10) forms an angle of 45° with the screen (1) and is located equidistant from its neighbours.

4. Apparatus according to any one of claims 1 to 3, characterised in that the p real lenses (3), each of which is associated with a real light source (4), are positioned perpendicular to the screen (1).

5. Apparatus according to any one of claims 1 to 4, characterised in that each of the n separation plates (10) has the same index of reflection, and in that the last plate is followed by a mirror (12) reflecting back along itself the light beam emerging from said last plate, and in that a second mirror (11) located behind the assembly of separation plates reflects back along themselves the light beams reflected by the rear faces of the separation plates.

6. Apparatus according to any one of claims 1 to 4, characterised in that each of the n separation plates (10) has a different coefficient of reflection, whereby the intensity of the light reflected on to the screen by each of the plates is the same, the last plate being totally reflective.

7. Apparatus according to any one of claims 1 to 6, characterised in that the real light sources are provided by means of fluorescent tubes.

8. Apparatus according to any one of claims 1 to 7, characterised in that the angle of incidence θ by which screen (1) is illuminated is selected such that θ = d/2f, wherein d is the diameter of the light sources, and f is the focal length of each real lens (3).

**Ansprüche**

1. Vorrichtung zum gleichmäßigen Beleuchten eines großen Anzeigeschirmes von rückwärts mittels unter einem kleinen Einfallswinkel θ einfallenden Lichtes, dadurch gekennzeichnet, daß die Vorrichtung in der Form einer Matrize n.p reele oder virtuelle Lichtquellen (4 oder 9) und n.p optische Elemente, durch die das von jeder Quelle herkommende Licht auf den Schirm lenkbar ist, wobei die n.p. optischen Elemente von n Trennplättchen (10) und von p reelen Linsen (3) gebildet sind, von denen jede einer reelen Lichtquelle zugeordnet ist und Mittel (5, 15) aufweist, um zu verhindern, daß die von jeder Lichtquelle ausgehenden Lichtstrahlen die den anderen Quellen zugeordneten, optischen Elemente erreichen.

2. Vorrichtung nach Anspruch 1, dadurch gekennzeichnet, daß die Mittel, die verwendet werden, zu verhindern, daß die von jeder Lichtquelle ausgesandten Lichtstrahlen, die den anderen Quellen zugeordneten optischen Elemente erreichen, von Blenden (5 oder 15) gebildet sind.

3. Vorrichtung nach Anspruch 1 oder 2, dadurch gekennzeichnet, daß jede der n Trennplättchen (10) einen Winkel von 45° mit dem Schirm (1) einschließt und mit gleichem Abstand von ihrem benachbarten angeordnet ist.

4. Vorrichtung nach irgendeinem der Ansprüche 1 bis 3, dadurch gekennzeichnet, daß die p reelen Linsen (3), von denen jeweils eine einer reelen Lichtquelle (4) zugeordnet ist, senkrecht zu dem Schirm (1) angeordnet sind.

5. Vorrichtung nach irgendeinem der Ansprüche 1 bis 4, dadurch gekennzeichnet, daß die n Trennplättchen (10) denselben Reflexionskoeffizienten aufweisen, daß dem letzten Plättchen ein Spiegel (12) folgt, der das von diesem letzten Plättchen ausgehende Lichtstrahlenbündel in sich selbst reflektiert, und daß ein zweiter Spiegel (11), der rückseitig der Gesamtheit der Trennplättchen angeordnet ist, auf diese die an der Rückseite der Trennplättchen (10) reflektierten Lichtbündel zurückwirft.

6. Vorrichtung nach irgendeinem der Ansprüche 1 bis 4, dadurch gekennzeichnet, daß die n Trennplättchen (10) jeweils einen unterschiedlichen Reflexionskoeffizienten derart aufweisen, daß die von jedem Plättchen auf den Schirm reflektierte Lichtintensität die gleiche ist, wobei das letzte Plättchen vollkommen reflektierend ist.

7. Vorrichtung nach irgendeinem der Ansprüche 1 bis 6, dadurch gekennzeichnet, daß die reelen Lichtquellen mittels Leuchtstoffröhren (9) erhalten werden.

8. Vorrichtung nach irgendeinem der Ansprüche 1 bis 7, dadurch gekennzeichnet, daß der Einfallswinkel (θ), unter dem der Schirm (1) beleuchtet wird, derart gewählt ist, daß θ = d/2f mit d den Durchmesser der Quelle unf f der Brennweite jeder reelen Linse (3).

# FIG.1

# FIG. 2

FIG. 3

FIG. 4

10n

6

2

1

10n-1

1b

1a

6

101

6

15

3

15

8

13    4

4